(19) **Europäisches Patentamt**
**European Patent Office**
**Office européen des brevets**

(11) **EP 4 763 684 A1**

(12) **EUROPÄISCHE PATENTANMELDUNG**

(43) Veröffentlichungstag:
24.06.2026 Patentblatt 2026/26

(21) Anmeldenummer: 25218594.7

(22) Anmeldetag: **26.11.2025**

(51) Internationale Patentklassifikation (IPC):
**B62M 6/50** (2010.01)     **B62J 45/412** (2020.01)

(52) Gemeinsame Patentklassifikation (CPC):
**B62M 6/50;** B62J 45/412

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **23.12.2024 DE 102024212269**

(71) Anmelder: **Robert Bosch GmbH**
**70442 Stuttgart (DE)**

(72) Erfinder:
• **Reck, Joseph**
**71093 Weil Im Schoenbuch (DE)**
• **Eberle, Sebastian**
**72072 Tuebingen (DE)**

(54) **VERFAHREN ZUM BETREIBEN EINER ANTRIEBSANORDNUNG EINES ELEKTROFAHRRADS**

(57)     Die vorliegende Erfindung betrifft ein Verfahren (20) zum Betreiben einer Antriebsanordnung (10) eines Elektrofahrrads (100), umfassend die Schritte: Erfassen (21) einer Trittfrequenz eines Kurbeltriebs (104), Erfassen (22) einer Hinterraddrehzahl eines Hinterrads (110), Ermitteln (23) eines Übersetzungsverhältnisses zwischen dem Kurbeltrieb (104) und dem Hinterrad (110), Ermitteln (24) eines Eingriffsverhältnisses (31) basierend auf Trittfrequenz und Hinterraddrehzahl und Übersetzungsverhältnis und Erzeugen (25) des Motormoments in Abhängigkeit des ermittelten Eingriffsverhältnisses (31).

**Fig. 1**

EP 4 763 684 A1

# Beschreibung

Stand der Technik

Die vorliegende Erfindung betrifft ein Verfahren zum Betreiben einer Antriebsanordnung eines Elektrofahrrads, eine Antriebsanordnung für ein Elektrofahrrad, und ein Elektrofahrrad.

Bekannt sind Elektrofahrräder mit einer Antriebseinheit zur Erzeugung eines Motormoments zur motorischen Unterstützung einer manuellen Tretkraft eines Fahrers. Üblicherweise erfolgt die Erzeugung des Motormoments dabei in Abhängigkeit der Tretkraft des Fahrers. Häufig erfolgt eine direkte Erfassung eines durch den Fahrer erzeugten Tretmoments, beispielsweise mittels Drehmomentsensoren. Dadurch wird jedoch häufig eine komplexe und kostenintensive Konstruktion der Antriebsanordnung des Elektrofahrrads erforderlich.

Offenbarung der Erfindung

Das erfindungsgemäße Verfahren mit den Merkmalen des Anspruchs 1 zeichnet sich demgegenüber dadurch aus, dass auf besonders einfache und kostengünstige Weise eine Motorunterstützung eines Elektrofahrrads bereitgestellt werden kann. Insbesondere kann dabei eine besonders einfache und kostengünstige Konstruktion der Antriebsanordnung des Elektrofahrrads ermöglicht werden. Dies wird erfindungsgemäß erreicht durch ein Verfahren zum Betreiben einer Antriebsanordnung eines Elektrofahrrads, umfassend die Schritte:

- Erfassen einer Trittfrequenz eines Kurbeltriebs,
- Erfassen einer Hinterraddrehzahl eines Hinterrads,
- Ermitteln eines Übersetzungsverhältnisses zwischen dem Kurbeltrieb und dem Hinterrad,
- Ermitteln eines Eingriffsverhältnisses basierend auf Trittfrequenz und Hinterraddrehzahl und Übersetzungsverhältnis, und
- Erzeugen des Motormoments in Abhängigkeit des ermittelten Eingriffsverhältnisses.

Als Übersetzungsverhältnis wird insbesondere ein Übersetzungsverhältnis eines mechanischen Drehmomentübertragungspfads zwischen dem Kurbeltrieb und dem Hinterrad angesehen. Beispielsweise entspricht das Übersetzungsverhältnis im Falle einer unmittelbaren Drehmoment-übertragenden Verbindung, das heißt insbesondere bei vollständigem Eingriff oder Kraftschluss des Drehmomentübertragungspfads, einem Verhältnis der Trittfrequenz und der Hinterraddrehzahl zueinander.

Als Eingriffsverhältnis wird insbesondere ein vorbestimmter Faktor angesehen, welcher ausschließlich auf den Größen Trittfrequenz, Hinterraddrehzahl und Übersetzungsverhältnis ermittelt wird. Vorzugsweise entspricht das Eingriffsverhältnis einem Verhältnis von der erfassten Hinterraddrehzahl zu der Trittfrequenz multipliziert mit dem Übersetzungsverhältnis. Besonders bevorzugt wird das Eingriffsverhältnis k basierend auf folgender Formel ermittelt:

$$k = \frac{\omega_{hr}}{i \cdot \omega_k}$$

mit dem Gangverhältnis i, der Hinterraddrehzahl $\omega_{hr}$ und der Trittfrequenz $\omega_k$.

Bevorzugt erfolgt das Erzeugen des Motormoments in Abhängigkeit des ermittelten Eingriffsverhältnisses derart, dass bei höheren Eingriffsverhältnissen ein größeres Motormoment erzeugt wird, und bei niedrigeren Eingriffsverhältnissen ein niedrigeres Motormoment erzeugt wird.

Mit anderen Worten werden bei dem Verfahren eine Trittfrequenz und eine Hinterraddrehzahl, vorzugsweise während der Fortbewegung des Elektrofahrrads, gleichzeitig erfasst. Zudem wird gleichzeitig ein momentanes Übersetzungsverhältnis zwischen Kurbeltrieb und Hinterrad erfasst. Anhand dieser ermittelten Größen wird ein momentanes Eingriffsverhältnis des Antriebsstrangs des Elektrofahrrads ermittelt. Die Erzeugung des Motormoments, insbesondere mittels einer Antriebseinheit der Antriebsanordnung des Elektrofahrrads, erfolgt dabei in Abhängigkeit des ermittelten Eingriffsverhältnisses.

Das Verfahren bietet damit den Vorteil, dass auf besonders einfache und kostengünstige Weise und zuverlässig das Motormoment gesteuert erzeugt werden kann, basierend auf einer besonders einfachen Erfassungsmöglichkeit. Hierbei können einfache und kostengünstige Sensoren verwendet werden, wie Drehzahlsensoren. Insbesondere kann auf einen Drehmomentsensor verzichtet werden. Zudem kann die Berechnung des zu erzielenden Motormoments auf besonders einfache Weise und zeiteffizient erfolgen. Weiterhin kann durch die Berücksichtigung des tatsächlichen momentanen Zustands des Antriebsstrangs hinsichtlich der Pedalbetätigung eine optimale an das Pedalierverhalten des Fahrers angepasste Steuerung des Antriebs bereitgestellt werden. Damit kann beispielsweise ein hoher Fahrkomfort für den Fahrer des Elektrofahrrads ermöglicht werden.

Die Unteransprüche haben bevorzugte Weiterbildungen der Erfindung zum Inhalt.

Bevorzugt umfasst das Verfahren ferner den Schritt: Erkennen eines aktiven Fahrereingriffs, wenn das ermittelte Eingriffsverhältnis mindestens einem vorbestimmten Eingriffsschwellwert entspricht. Das Erzeugen des Motormoments erfolgt dabei in Abhängigkeit des erkannten aktiven Fahrereingriffs. Insbesondere wird als aktiver Fahrereingriff eine ein Vortriebsmoment erzeugende Interaktion des Fahrers des Elektrofahrrads mit dem Antriebsstrang des Elektrofahrrads angesehen. Das heißt, beim aktiven Fahrereingriff wird durch die Tretkraft des Fahrers zumindest anteilig ein Antriebsmoment des Elektrofahrrads bewirkt. Mit anderen Worten wird beim aktiven Fahrereingriff der Antriebsstrang durch die Tretkraft des Fahrers gespannt. Besonders bevorzugt beträgt der Eingriffsschwellwert mindestens 0,85, bevorzugt mindestens 0,9, weiter bevorzugt mindestens 0,95, insbesondere maximal 1,1. Vorzugsweise erfolgt das gesteuerte Erzeugen des Motormoments in Abhängigkeit des aktiven Fahrereingriffs derart, dass als Motormoment ein bestimmtes Soll-Motormoment ausschließlich bei erkanntem aktiven Fahrereingriff bereitgestellt wird. Das heißt, ein gewünschtes Soll-Motormoment, welches beispielsweise anhand verschiedener Unterstützungsmodi des Elektrofahrrads vorgebbar ist, wird nur dann bereitgestellt, während der aktive Fahrereingriff erkannt wird. Dadurch kann mit einfachen und kostengünstigen Mitteln ein besonders gezielter Betrieb des Elektrofahrrads mit hohem Nutzerkomfort bereitgestellt werden.

Besonders bevorzugt ist eine Kennlinie definiert, welche eine Soll-Motorunterstützung in Abhängigkeit des Eingriffsverhältnisses definiert. Das Erzeugen des Motormoments erfolgt dabei basierend auf der Kennlinie. Das heißt, insbesondere definiert die Kennlinie für jedes mögliche Eingriffsverhältnis genau einen Wert für die Soll-Motorunterstützung, auf welche insbesondere das Motormoment beim gesteuerten Erzeugen geregelt wird. Bevorzugt ist die Kennlinie genau vordefiniert und beispielsweise gespeichert. Alternativ bevorzugt ist die Kennlinie adaptierbar ausgebildet, beispielsweise anhand verschiedener Fahrparameter oder dergleichen. Mittels der Kennlinie kann das Betreiben des Elektrofahrrads auf besonders einfache Weise und mit einfachen und kostengünstigen Mitteln erfolgen, wobei eine optimale Bereitstellung des Motormoments für einen hohen Fahrkomfort ermöglicht werden kann.

Bevorzugt definiert die Kennlinie einen Eingriffsbereich, innerhalb welchem ein Eingriffsverhältnis mit dem Wert 1 liegt. Insbesondere entspricht der Eingriffsbereich einem Teil der Kennlinie, welcher sich über einem bestimmten Eingriffsverhältnis-Bereich erstreckt. Insbesondere liegt der Wert 1 mittig innerhalb dieses Eingriffsverhältnis-Bereichs. Der Eingriffsbereich definiert dabei als Soll-Motorunterstützung eine vorbestimmte Eingriffs-Motorunterstützung. Vorzugsweise wird als Eingriffs-Motorunterstützung ein Ausgangsmoment eines Fahrreglers angesehen, oder alternativ ein vorbestimmtes definiertes Motormoment mit einem bestimmten Wert, oder alternativ ein Faktor 1 multipliziert mit dem ausgegebenen Fahrregler-Moment. Vorzugsweise erstreckt sich der Eingriffsbereich zwischen Eingriffsverhältnissen von mindestens 0,85, bevorzugt mindestens 0,9, insbesondere mindestens 0,95, bis maximal 1,2, bevorzugt maximal 1,15, insbesondere maximal 1,1, besonders bevorzugt maximal 1,05. Mit anderen Worten definiert die Kennlinie mittels des Eingriffsbereichs, welcher im Wesentlichen den erkannten aktiven Fahrereingriff repräsentiert, dass das volle vorgesehene Motormoment bereitgestellt wird. Dieses Motormoment kann beispielsweise basierend auf dem Ausgang des Fahrreglers, welcher insbesondere ein bestimmtes Motormoment in Abhängigkeit eines gewählten Unterstützungsmodus bereitstellen kann, erzeugt werden. Damit kann besonders gezielt und auf einfache Weise ermöglicht werden, dass gezielt beim aktiven Fahrereingriff das vorgesehene Motormoment erzeugt wird.

Weiter bevorzugt weist die Kennlinie einen Boost-Bereich auf, welcher bei Eingriffsverhältnissen von größer als 1, insbesondere größer gleich 1,05, liegt. Der Boost-Bereich definiert dabei eine Boost-Motorunterstützung als die Soll-Motorunterstützung, welche größer als die Eingriffs-Motorunterstützung ist. Insbesondere entspricht die Boost-Motorunterstützung einer maximalen Motorunterstützung, welche die Antriebsanordnung bereitstellen kann. Das heißt, im Boost-Bereich wird als Motormoment das maximal mögliche Motormoment der Antriebseinheit der Antriebsanordnung erzeugt.

Bevorzugt weist der Boost-Bereich zumindest einen Linearbereich und einen Konstantbereich auf, wobei der Linearbereich zwischen dem Konstantbereich und dem Eingriffsbereich der Kennlinie angeordnet ist. Im Linearbereich erfolgt ein lineares Erhöhen der Motorunterstützung in Abhängigkeit des Eingriffsverhältnisses, insbesondere bis hin zu der Boost-Motorunterstützung des Konstantbereichs. Damit kann ein kontinuierliches Erhöhen des Motormoments bei höheren Eingriffsverhältnissen als im Eingriffsbereich bereitgestellt werden.

Insbesondere kann mittels des Boost-Bereichs eine kurzzeitige Überhöhung der maximalen Unterstützung der Antriebsanordnung bereitgestellt werden. Dadurch können beispielsweise Beschleunigungsvorgänge mit kurzzeitiger besonders hoher Beschleunigung ermöglicht werden. Beispielsweise können die überhöhten Eingriffsverhältnisse höher als beim aktiven Fahrereingriff in Fällen auftreten, wenn beispielsweise aufgrund eines hohen oder stark ansteigenden Tretmoments des Fahrers Dehnungen und Längungen in Teilen des Antriebsstrangs auftreten. Da heißt, beispielsweise wird durch ein sehr starkes Antreten des Fahrers die Fahrradkette gedehnt, wodurch das ermittelte Eingriffsverhältnis über den Wert von 1 bzw. 1,05 steigen kann. Alternativ kann das erhöhte Eingriffsverhältnis durch eine schnellere genauere Erfassung der Signale an der Kurbel im Vergleich zum Hinterrad auftreten. Dadurch, dass in diesen Situationen das maximal mögliche Motormoment bereitgestellt wird, kann in diesen Situationen ein besonders hoher Fahrkomfort für den Fahrer durch hohe Unterstützung bereitgestellt werden.

Vorzugsweise definiert die Kennlinie ferner einen Leerlauf-Bereich, welcher bei Eingriffsverhältnissen von kleiner 0,8, insbesondere kleiner als 0,5, liegt. Der Leerlauf-Bereich definiert dabei eine Soll-Motorunterstützung von Null. Als Leerlauf-Bereich wird dabei insbesondere ein Bereich angesehen, in welchem der Fahrer des Elektrofahrrads gar nicht pedaliert oder leer pedaliert, das heißt mit einer Trittfrequenz, welche signifikant unterhalb einer Eingriffstrittfrequenz liegt. In dem Leerlauf-Bereich wird dabei gar kein Motormoment von der Antriebseinheit erzeugt. Somit kann auf einfache Weise und zuverlässig sichergestellt werden, dass beim Leerpedalieren oder bei gar keiner Pedalbetätigung keine Erzeugung eines Motormoments erfolgt.

Weiter bevorzugt definiert die Kennlinie ferner einen Rampenbereich, welcher zwischen dem Leerlauf-Bereich und dem Eingriffsbereich liegt. Der Rampenbereich definiert dabei eine kontinuierliche Erhöhung der Soll-Motorunterstützung in Abhängigkeit des ermittelten Eingriffsverhältnisses. Das heißt, bei Eingriffsverhältnissen, die innerhalb des Rampenbereichs liegen, erfolgt eine geringe Motorunterstützung mit einem Motormoment unterhalb der vorbestimmten Eingriffs-Motorunterstützung des Eingriffsbereichs. Damit kann ein kontinuierliches fortlaufendes Anfahren der Motorunterstützung ausgehend von Null bis hin zur Eingriffs-Motorunterstützung bereitgestellt werden. Dadurch erfolgt kein schlagartiges Einsetzen der Motorunterstützung, sondern ein sanftes Eingreifen der Motorunterstützung bei bevorstehendem vollständigen aktiven Fahrereingriff. Analog erfolgt in umgekehrter Richtung bei bevorstehendem Ende des aktiven Fahrereingriffs, das heißt wenn das Eingriffsverhältnis sinkt, ein langsames kontinuierliches Reduzieren der Motorunterstützung bis hin zu Null. Damit kann ein besonders hoher Fahrkomfort für den Fahrer des Elektrofahrrads ermöglicht werden.

Besonders bevorzugt weist der Rampenbereich zumindest zwei Teilbereiche mit unterschiedlicher Steigung der kontinuierlichen Erhöhung der Soll-Motorunterstützung auf. Das heißt, der Gradient der Kennlinie ist in den zumindest zwei Teilbereichen des Rampenbereichs unterschiedlich. Bevorzugt ist der Gradient in einem ersten Teilbereich, welcher bei kleineren Eingriffsverhältnissen liegt, kleiner als der Gradient in einem zweiten Teilbereich, der bei größeren Eingriffsverhältnissen liegt. Besonders bevorzugt ist die Kennlinie in den beiden Teilbereichen jeweils als eine Gerade ausgebildet. Alternativ bevorzugt kann die Kennlinie in Form einer beliebigen mathematischen Funktion ausgestaltet sein. Damit kann ermöglicht werden, dass bei niedrigeren Eingriffsverhältnissen innerhalb des Rampenbereichs zunächst eine langsame Erhöhung des Motormoments stattfindet, wobei bei größeren Eingriffsverhältnissen nahe an dem aktiven Fahrereingriff eine schnellere Erhöhung des Motormoments erfolgt. Insbesondere kann damit ein sogenanntes Segeln, bei dem der Fahrer mit geringer Trittfrequenz und ohne Eingriff pedaliert und gleichzeitig ein vergleichsweise hohes Motormoment erzeugt wird, vermieden oder vermindert werden. Zudem kann ein zuverlässiges und schnelles Hochfahren der Motorunterstützung bei kurz bevorstehendem Fahrereingriff bereitgestellt werden.

Vorzugsweise umfasst das Verfahren ferner den Schritt: Skalieren der Kennlinie in Abhängigkeit verschiedener, bevorzugt manuell betätigbarer, Unterstützungsmodi des Elektrofahrrads. Als Skalieren wird insbesondere ein Verändern der Kennlinie im Hinblick auf unterschiedlich starke Motorunterstützungen angesehen. Beispielsweise kann die Kennlinie dabei in der Achse der Motorunterstützung verschoben werden für unterschiedliche Unterstützungsmodi. Alternativ oder zusätzlich bevorzugt können die Bereiche hinsichtlich verschiedener Eingriffsverhältnisse verschoben oder gestreckt oder gestaucht werden. Damit kann insbesondere der Grad der Unterstützung durch die Antriebseinheit bei den verschiedenen Unterstützungsmodi unterschiedlich ausgestaltet werden.

Bevorzugt erfolgt das Ermitteln des Übersetzungsverhältnisses basierend auf einem Signal eines Schaltsystems. Insbesondere wenn das Schaltsystem eine elektronische Schaltung umfasst, kann das Übersetzungsverhältnis beispielsweise direkt als Signal von dem Schaltsystem bereitgestellt werden. Alternativ oder zusätzlich bevorzugt erfolgt das Ermitteln des Übersetzungsverhältnisses basierend auf der erfassten Trittfrequenz des Kurbeltriebs und der erfassten Hinterraddrehzahl des Hinterrads, vorzugsweise wenn ein aktiver Fahrereingriff erkannt wurde. Das heißt, das momentane Übersetzungsverhältnis kann auch in den Situationen, in denen der aktive Fahrereingriff vorliegt, berechnet werden. Beispielsweise kann das Übersetzungsverhältnis dabei nach einer Berechnung beibehalten werden, und vorzugsweise nachfolgend bei bestimmten Situationen, wie beispielsweise bei einem Gangwechsel, neu berechnet werden. Alternativ oder zusätzlich bevorzugt kann das Übersetzungsverhältnis in regelmäßigen Abständen automatisch neu berechnet werden. Damit kann auf flexible und effektive Weise das Übersetzungsverhältnis ermittelt und basierend darauf das Eingriffsverhältnis ermittelt werden.

Vorzugsweise erfolgt das Erfassen der Trittfrequenz des Kurbeltriebs mittels einer höheren zeitlichen Abtastrate als das Erfassen der Hinterraddrehzahl des Hinterrads. Mit anderen Worten weist eine Trittfrequenz-Sensorik zur Erfassung der Trittfrequenz eine höhere zeitliche Abtastrate als eine Hinterraddrehzahl-Sensorik zur Erfassung der Hinterraddrehzahl auf. Damit kann eine besonders präzise und zuverlässige Erfassung der für die Durchführung des Verfahrens relevanten Größen erfolgen. Insbesondere kann somit zuverlässig der Fahrereingriff genau erkannt werden. Ferner kann damit präzise die Überhöhung der Trittfrequenz über die Hinterraddrehzahl, welche ein Eingriffsverhältnis von größer als 1 bewirkt, und damit in den Boost-Bereich fällt, ermittelt werden.

Weiterhin führt die Erfindung zu einer Antriebsanordnung für ein Elektrofahrrad, umfassend eine Steuereinheit, welche eingerichtet ist zur Durchführung des beschriebenen Verfahrens. Insbesondere umfasst die Antriebsanordnung ferner eine Antriebseinheit, wobei die Steuereinheit zusätzlich eingerichtet ist, die Antriebseinheit gesteuert zu betätigen zum Erzeugen des Motormoments.

Ferner betrifft die Erfindung ein Elektrofahrrad, umfassend die beschriebene Antriebsanordnung.

Bevorzugt ist das Elektrofahrrad oder die Antriebsanordnung drehmomentsensorlos und/oder lagerkraftsensorlos ausgebildet. Das heißt, insbesondere ist zur Erfassung der Pedalbetätigung keinerlei Drehmomentsensor und/oder Lagerkraftsensor vorhanden. Dadurch kann ein besonders einfacher und kostengünstiger Aufbau des Elektrofahrrads bzw. der Antriebsanordnung bereitgestellt werden.

Kurze Beschreibung der Zeichnungen

Nachfolgend wird die Erfindung anhand eines Ausführungsbeispiels in Verbindung mit den Figuren beschrieben. In den Figuren sind funktional gleiche Bauteile jeweils mit den gleichen Bezugszeichen gekennzeichnet. Dabei zeigt:

Figur 1    eine vereinfachte schematische Ansicht eines Elektrofahrrads, bei dem ein Verfahren gemäß einem bevorzugten Ausführungsbeispiel der Erfindung durchgeführt wird,

Figur 2    eine stark vereinfachte schematische Ansicht des erfindungsgemäßen Verfahrens, und

Figur 3    eine stark vereinfachte schematische Ansicht einer beispielhaften Kennlinie, welche bei dem erfindungsgemäßen Verfahren verwendet wird.

Ausführungsformen der Erfindung

Bevorzugt sind alle gleichen Bauteile, Elemente und/oder Einheiten in allen Figuren mit den gleichen Bezugszeichen versehen.

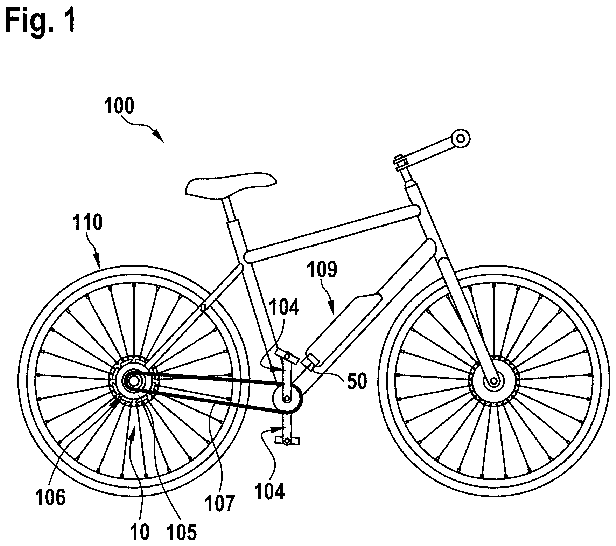

Figur 1 zeigt eine vereinfachte schematische Ansicht eines Elektrofahrrads 100 mit einer Antriebsanordnung 10, bei dem ein Verfahren 20 zum Betreiben der Antriebsanordnung 10 gemäß einem bevorzugten Ausführungsbeispiel der Erfindung durchgeführt wird.

Die Antriebsanordnung 10 des Elektrofahrrads 100 umfasst eine Antriebseinheit 105, die einen Motor aufweist, der insbesondere ein Elektromotor ist. Der Motor kann mittels eines elektrischen Energiespeichers 109 des Elektrofahrrads 100 mit elektrischer Energie versorgt werden.

Die Antriebseinheit 105 ist als eine Nabenantriebseinheit ausgebildet, und an einer Hinterradnabe eines Hinterrads 110 des Elektrofahrrads 100 angeordnet.

In einer alternativen (nicht dargestellten) bevorzugten Ausführungsform kann es sich auch um ein Elektrofahrrad 100 mit Mittelmotor handeln, bei dem die Antriebseinheit 105 im Bereich eines Tretlagers angeordnet ist.

Durch ein mittels des Motors der Antriebseinheit 105 erzeugtes Motormoment kann eine durch Muskelkraft erzeugte Tretkraft eines Fahrers des Elektrofahrrads 100 motorisch unterstützt werden. Die Muskelkraft des Fahrers kann dabei über einen Kurbeltrieb 104 mit Kurbeln aufgebracht werden.

Die Antriebsanordnung 10 umfasst ferner eine Steuereinheit 50, welche eingerichtet ist, um die Antriebseinheit 105 gesteuert zu betätigen.

Beispielsweise kann die Steuereinheit 50 einen elektrischen Betätigungsstrom zum Betätigen des Motors der Antriebseinheit 105 steuern.

Die Steuereinheit 50 ist in der dargestellten Ausführungsform beispielhaft an dem elektrischen Energiespeicher 109 angeordnet. Alternativ bevorzugt kann die Steuereinheit 50 auch beliebig an anderen Positionen am Elektrofahrrad 100 angeordnet sein.

Das vom Fahrer am Kurbeltrieb 104 aufgebrachte Tretmoment kann über ein Übertragungselement 107, wie vorzugsweise eine Fahrradkette, an die Hinterradnabe des Hinterrads 110 übertragen werden.

Bevorzugt ist zwischen dem Motor der Antriebseinheit 105 und der Hinterradnabe ein Getriebe angeordnet, welches Teil der Antriebseinheit 105 ist.

Ferner umfasst das Elektrofahrrad 100 ein Schaltsystem 106, mittels welchem mehrere verschiedene Übersetzungsverhältnisse bereitgestellt werden können. Das Schaltsystem 105 kann beispielsweise durch den Fahrer manuell betätigbar, und/oder automatisch von der Steuereinheit 50 betätigbar verschiedene Übersetzungsverhältnisse bereitstellen.

Mittels des Verfahrens 20 erfolgt ein gesteuertes Betätigen der Antriebseinheit 105 in Abhängigkeit der Pedalbetätigung durch den Fahrer, ohne dass Pedalkraft- oder Tretmomentsensoren verwendet werden.

Die Steuereinheit 50 ist ferner eingerichtet zur Durchführung des Verfahrens 20.

Bei dem Verfahren 20 erfolgt ein Erfassen 21 einer Trittfrequenz des Kurbeltriebs 104 und gleichzeitig ein Erfassen 22 einer Hinterraddrehzahl des Hinterrads 110.

Weiterhin erfolgt gleichzeitig ein Ermitteln 23 des momentanen Übersetzungsverhältnisses zwischen dem Kurbeltrieb 104 und dem Hinterrad 110.

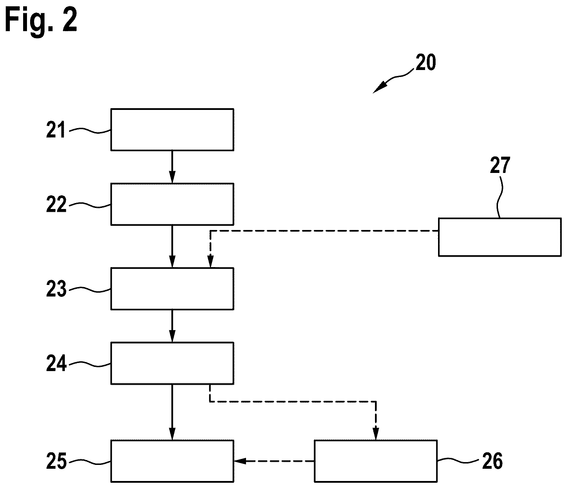

Bevorzugt erfolgt das Ermitteln 23 des Übersetzungsverhältnisses basierend auf einem Bereitstellen des momentanen Übersetzungsverhältnisses mittels einer Ermittlungseinheit, welche im Schritt 27 in Figur 2 das Übersetzungsverhältnis ermittelt und bereitstellt. Beispielhafte Methoden zur Ermittlung des Übersetzungsverhältnisses werden später beschrieben.

Basierend auf der erfassten Trittfrequenz und der erfassten Hinterraddrehzahl und dem ermittelten Übersetzungsverhältnis erfolgt anschließend ein Ermitteln 24 eines Eingriffsverhältnisses 31.

In Abhängigkeit des ermittelten Eingriffsverhältnisses 31 erfolgt anschließend ein Erzeugen 25 des Motormoments mittels der Antriebseinheit 105.

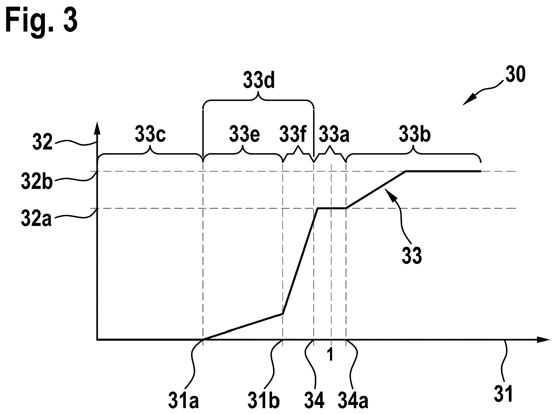

Bevorzugt erfolgt bei dem Verfahren optional ein Erkennen 26 eines aktiven Fahrereingriffs, wenn das im Schritt 24 ermittelte Eingriffsverhältnis 31 mindestens einem vorbestimmten Eingriffsschwellwert 34 entspricht (vgl. Figur 3). Bevorzugt erfolgt in diesem Fall das Erzeugen 25 des Motormoments alternativ oder zusätzlich in Abhängigkeit des im Schritt 26 erkannten aktiven Fahrereingriffs.

Bei dem Verfahren 20 erfolgt dabei das Erzeugen 25 des Motormoments basierend auf einer Kennlinie 33, wie nachfolgend anhand der Figur 3 erläutert.

Figur 3 zeigt eine vereinfachte schematische Ansicht eines Diagramms 30, in welchem eine beispielhafte Kennlinie 33 dargestellt ist.

Die Kennlinie 33 definiert eine Soll-Motorunterstützung 32 in Abhängigkeit des Eingriffsverhältnisses 31.

Bevorzugt wird als Soll-Motorunterstützung 32 dabei ein vorbestimmter Faktor ermittelt, welcher mit einem Fahrregler-Moment, welches insbesondere ein Fahrregler des Elektrofahrrads 100 ausgibt, multipliziert wird. Bevorzugt kann das Fahrregler-Moment einem konstanten Drehmomentwert entsprechen, welcher insbesondere niedriger als ein technisches Maximalmoment der Antriebseinheit 105 ist.

Die Kennlinie 33 weist dabei vier unterschiedliche Bereiche 33a, 33b, 33c, 33d auf.

Ein Eingriffsbereich 33a der Kennlinie 33 erstreckt sich von einem vorbestimmten Eingriffsschwellwert 34, welcher vorzugsweise 0,95 beträgt, bis zu einem oberen Eingriffsschwellwert 34a, welcher vorzugsweise 1,05 beträgt. Innerhalb des Eingriffsbereichs 33a definiert die Kennlinie 33 als Soll-Motorunterstützung 32 eine vorbestimmte Eingriffs-Motorunterstützung 32a.

Beim Eingriffsbereich 33a wird als Eingriffs-Motorunterstützung 32a dabei bevorzugt der Faktor 1 ausgegeben.

Ferner definiert die Kennlinie 33 einen Boost-Bereich 33b, welcher bei Eingriffsverhältnissen 31 oberhalb denen des Eingriffsbereichs 33a liegt. Derartige überhöhte Eingriffsverhältnisse 31 können beispielsweise bei sehr starkem Antreten durch den Fahrer des Elektrofahrrads 100 auftreten, wodurch Dehnungen im Antriebsstrang, insbesondere im Übertragungselement, auftreten können, die zu einer höheren Trittfrequenz im Vergleich zur Hinterraddrehzahl bei Berücksichtigung des Übersetzungsverhältnisses auftreten können.

Im Boost-Bereich 33b erfolgt zunächst ein linearer Anstieg der Soll-Motorunterstützung 32 mit dem Eingriffsverhältnis 31, bis zu einem Maximalwert, welcher einer Boost-Motorunterstützung 32b entspricht. Bevorzugt entspricht die Boost-Motorunterstützung 32b einem maximalen Motormoment der Antriebseinheit 105. Damit kann ein sehr starkes Pedalieren des Fahrers als Wunsch für eine maximale Motorunterstützung interpretiert werden und entsprechend ein hohes Motormoment erzeugt werden.

Weiterhin definiert die Kennlinie 33 einen Leerlauf-Bereich 33c welcher bei den kleinsten Eingriffsverhältnissen, insbesondere von Null bis zu einem maximalen Leerlauf-Eingriffsverhältnis 31a von 0,5, liegt. Der Leerlauf-Bereich 33c definiert eine Soll-Motorunterstützung 32 von Null. Das heißt, im Leerlauf-Bereich 33c wird angenommen, dass gar kein Pedalieren oder ein Leerpedalieren des Fahrers vorliegt. In diesem Bereich soll gar keine Motorunterstützung durch die Antriebseinheit erfolgen.

Ferner definiert die Kennlinie 33 einen Rampenbereich 33d, welcher zwischen dem Leerlauf-Bereich 33c und dem Eingriffsbereich 33a liegt. Innerhalb des Rampenbereichs 33d ist eine kontinuierliche Erhöhung der Soll-Motorunterstützung 32 in Abhängigkeit des ermittelten Eingriffsverhältnisses 31 ausgehend von Null bis auf die vorbestimmte Eingriffs-Motorunterstützung 32a definiert.

Der Rampenbereich 33d weist dabei einen ersten Teilbereich 33e und einen zweiten Teilbereich 33f auf. Der erste Teilbereich 33e bei niedrigeren Eingriffsverhältnissen 31 weist dabei eine geringere Steigung der Kennlinie 33 auf, als der zweite Teilbereich 33f.

Insbesondere liegt der Übergang zwischen erstem Teilbereich 33e und zweitem Teilbereich 33f bei einem Rampen-Eingriffsverhältnis 31b, welches vorzugsweise 0,8 beträgt.

Die Steigung der Kennlinie 33 ist im ersten Teilbereich 33e vorzugsweise kleiner als 1 und insbesondere im zweiten Teilbereich 33f größer als 1.

Der Rampenbereich 33d bewirkt dabei ein kontinuierliches gleichmäßiges Anfahren der Motorunterstützung zwischen den Bereichen mit gar keiner und mit voller Motorunterstützung. Dadurch kann ein sanftes Eingreifen der Motorunterstützung bereitgestellt werden, wodurch ein natürliches Fahrgefühl und somit ein besonders hoher Fahrkomfort für den Fahrer des Elektrofahrrads 100 bereitgestellt werden kann.

Das Ermitteln 23 des Übersetzungsverhältnisses bei der Durchführung des Verfahrens 20 kann vorzugsweise basierend auf einem Signal des Schaltsystems 106 des Elektrofahrrads 100 erfolgen, insbesondere wenn das Schaltsystem 106 eine elektronische Gangschaltung aufweist. In diesem Fall kann beispielsweise das Schaltsystem 106 das momentane Übersetzungsverhältnis unmittelbar als Wert, beispielsweise basierend auf vorbekannten Eigenschaften des Schaltsystems 106 sowie des Antriebsstrangs des Elektrofahrrads 100 bereitstellen.

Alternativ bevorzugt kann ein automatisches Berechnen des Übersetzungsverhältnisses erfolgen. Hierbei kann das Übersetzungsverhältnis basierend auf der erfassten Trittfrequenz des Kurbeltriebs 104 und der erfassten Hinterraddrehzahl des Hinterrads 110 während des erkannten aktiven Fahrereingriffs erfolgen.

Wenn kein aktiver Fahrereingriff erkannt wird, kann beispielsweise das Übersetzungsverhältnis als konstant angenommen werden, und beim nächsten erkannten Fahrereingriff beispielsweise neu berechnet werden.

Vor einer erstmaligen Erkennung des aktiven Fahrereingriffs kann beispielsweise ein vorbestimmtes beispielhaftes Übersetzungsverhältnis angenommen werden.

**Patentansprüche**

1. Verfahren zum Betreiben einer Antriebsanordnung (10) eines Elektrofahrrads (100), umfassend die Schritte:

    - Erfassen (21) einer Trittfrequenz eines Kurbeltriebs (104),
    - Erfassen (22) einer Hinterraddrehzahl eines Hinterrads (110),
    - Ermitteln (23) eines Übersetzungsverhältnisses zwischen dem Kurbeltrieb (104) und dem Hinterrad (110),
    - Ermitteln (24) eines Eingriffsverhältnisses (31) basierend auf Trittfrequenz und Hinterraddrehzahl und Übersetzungsverhältnis, und
    - Erzeugen (25) des Motormoments in Abhängigkeit des ermittelten Eingriffsverhältnisses (31).

2. Verfahren nach Anspruch 1, ferner umfassend den Schritt:

    - Erkennen (26) eines aktiven Fahrereingriffs, wenn das ermittelte Eingriffsverhältnis (31) mindestens einem vorbestimmten Eingriffsschwellwert (34) entspricht,
    - wobei das Erzeugen (25) des Motormoments in Abhängigkeit des erkannten aktiven Fahrereingriffs erfolgt.

3. Verfahren nach einem der vorhergehenden Ansprüche,

    - wobei eine Kennlinie (33) definiert ist, welche eine Soll-Motorunterstützung (32) in Abhängigkeit des Eingriffsverhältnisses (31) definiert, und
    - wobei das Erzeugen (25) des Motormoments basierend auf der Kennlinie (33) erfolgt.

4. Verfahren nach Anspruch 3,

    - wobei die Kennlinie (33) einen Eingriffsbereich (33a) definiert, innerhalb welchem ein Eingriffsverhältnis (31) mit dem Wert 1 liegt, und
    - wobei der Eingriffsbereich (33a) als Soll-Motorunterstützung (32) eine vorbestimmte Eingriffs-Motorunterstützung (32a) definiert.

5. Verfahren nach Anspruch 4,

    - wobei die Kennlinie (33) einen Boost-Bereich (33b) aufweist, welcher bei Eingriffsverhältnissen (31) von größer als 1, insbesondere größer gleich 1,05, liegt, und
    - wobei der Boost-Bereich (33b) als Soll-Motorunterstützung (32) eine Boost-Motorunterstützung (32b) definiert, welche größer als die Eingriffs-Motorunterstützung (32a) ist.

6. Verfahren nach einem der Ansprüche 4 oder 5,

    - wobei die Kennlinie (33) einen Leerlauf-Bereich (33c) definiert, welcher bei Eingriffsverhältnissen von kleiner als 0,8, insbesondere kleiner als 0,5, liegt, und
    - wobei der Leerlauf-Bereich (33c) eine Soll-Motorunterstützung (32) von Null definiert.

7. Verfahren nach Anspruch 6,

    - wobei die Kennlinie (33) einen Rampenbereich (33d) definiert, welcher zwischen dem Leerlauf-Bereich (33c) und dem Eingriffsbereich (33a) liegt, und
    - wobei der Rampenbereich (33d) eine kontinuierliche Erhöhung der Soll-Motorunterstützung (32) in Abhängigkeit des ermittelten Eingriffsverhältnisses (31) definiert.

8. Verfahren nach Anspruch 7, wobei der Rampenbereich (33d) zumindest zwei Teilbereiche (33e, 33f) mit unterschiedlicher Steigung der kontinuierlichen Erhöhung der Soll-Motorunterstützung (32) aufweist.

9. Verfahren nach einem der Ansprüche 3 bis 8, ferner umfassend den Schritt:

    - Skalieren der Kennlinie (33) in Abhängigkeit verschiedener, vorzugsweise manuell betätigbarer, Unterstützungsmodi des Elektrofahrrads (100).

10. Verfahren nach einem der vorhergehenden Ansprüche,

    - wobei das Ermitteln (23) des Übersetzungsverhältnisses basierend auf einem Signal eines Schaltsystems (106) erfolgt, und/oder
    - wobei das Ermitteln (23) des Übersetzungsverhältnisses basierend auf der erfassten Trittfrequenz des Kurbeltriebs (104) und der erfassten Hinterraddrehzahl des Hinterrads (110), insbesondere bei erkannten aktiven Fahrereingriff, erfolgt.

11. Verfahren nach einem der vorhergehenden Ansprüche, wobei das Erfassen (22) der Trittfrequenz des Kurbeltriebs (104) mittels einer höheren zeitlichen Abtastrate als das Erfassen (23) der Hinterraddrehzahl des Hinterrads (110) erfolgt.

**12.** Antriebsanordnung (10) für ein Elektrofahrrad (100), umfassend eine Steuereinheit (50), welche eingerichtet ist zur Durchführung des Verfahrens (20) nach einem der vorhergehenden Ansprüche

**13.** Elektrofahrrad, umfassend eine Antriebsanordnung (10) nach Anspruch 12.

**14.** Elektrofahrrad nach Anspruch 13, wobei das Elektrofahrrad (100) oder die Antriebsanordnung (10) drehmomentsensorlos und/oder lagerkraftsensorlos ausgebildet ist.

# Fig. 1

Fig. 2

# Fig. 3

# EUROPÄISCHER RECHERCHENBERICHT

**Europäisches Patentamt**
European Patent Office
Office européen des brevets

Nummer der Anmeldung

EP 25 21 8594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/359771 A1 (SCHRAFF UWE [DE] ET AL) 31. Oktober 2024 (2024-10-31) * das ganze Dokument * ----- | 1-5,9-14 | INV. B62M6/50 |
| A | US 11 130 548 B2 (SHIMANO KK [JP]) 28. September 2021 (2021-09-28) * Ansprüche 13,18; Abbildungen 1-17 * ----- | 1 | ADD. B62J45/412 |
| A | WO 2015/017456 A2 (MOTIV TECHNOLOGY INC [US]) 5. Februar 2015 (2015-02-05) * Anspruch 7; Abbildungen 1-12 * ----- | 1 | |

**RECHERCHIERTE SACHGEBIETE (IPC)**

B62M
B62J

Der vorliegende Recherchenbericht wurde für alle Patentansprüche erstellt

| Recherchenort | Abschlußdatum der Recherche | Prüfer |
|---|---|---|
| Den Haag | 22. April 2026 | Molina Encabo, Aitor |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 21 8594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2026

| Im Recherchenbericht angeführtes Patentdokument | Datum der Veröffentlichung | Mitglied(er) der Patentfamilie | Datum der Veröffentlichung |
|---|---|---|---|
| US 2024359771 A1 | 31-10-2024 | DE 102023203911 B3 | 12-09-2024 |
| | | EP 4454982 A1 | 30-10-2024 |
| | | US 2024359771 A1 | 31-10-2024 |
| US 11130548 B2 | 28-09-2021 | CN 109720496 A | 07-05-2019 |
| | | CN 113184104 A | 30-07-2021 |
| | | CN 113602411 A | 05-11-2021 |
| | | DE 102018218167 A1 | 02-05-2019 |
| | | JP 7343266 B2 | 12-09-2023 |
| | | JP 2019081397 A | 30-05-2019 |
| | | TW 201922559 A | 16-06-2019 |
| | | TW 202225023 A | 01-07-2022 |
| | | US 2019127020 A1 | 02-05-2019 |
| WO 2015017456 A2 | 05-02-2015 | KEINE | |

EPO FORM P0461

Für nähere Einzelheiten zu diesem Anhang : siehe Amtsblatt des Europäischen Patentamts, Nr.12/82